# EUROPEAN PATENT SPECIFICATION

(11) **EP 3 922 336 B1**
(45) Date of publication and mention of the grant of the patent: **12.07.2023**
(21) Application number: 21174670.6
(22) Date of filing: 19.05.2021
(51) Int. Cl.: B01D 29/96, B01D 36/00

(54) **MANIFOLD ASSEMBLY AND METHOD OF USE**
VERTEILERANORDNUNG UND VERFAHREN ZUR VERWENDUNG
ENSEMBLE COLLECTEUR ET PROCÉDÉ D'UTILISATION

(30) Priority: 08.06.2020 CN 202010512864; 15.06.2020 US 202016901367
(43) Date of publication of application: 15.12.2021
(73) Proprietor: Pall Corporation, Port Washington, NY 11050 (US)
(72) Inventor: SUN, Peng, Zouping City (CN); ZHONG, Xiangyang, Beijing (CN); ZHOU, Liang, Beijing (CN)
(74) Representative: Hoeger, Stellrecht & Partner Patentanwälte mbB

(56) References cited:
- WO-A2-2010/027989
- JP-A- 2003 251 110
- KR-A- 20120 038 299
- US-A1- 2018 318 738

## Description

### BACKGROUND OF THE INVENTION

The Japanese patent application JP2003-251110 A discloses a connector device capable of accurately and properly connecting a filter cartridge to a piping system. The connector device includes an operation lever and is equipped with a fixing part having a plurality of connection pipes provided to the lower surface thereof so as to be airtightly attached and detached with respect to a fluid entrance and exit pipe at the time of attachment and detachment of the filter cartridge. The connector device further comprises a movable table having a flange holding part holding a horizontal flange so as to arrange a fluid inlet and outlet pipe to the connection pipes, a guide mechanism comprising two elongated members, which cross mutually in an X-shape and mutually pivoted at the central crossing point so as to restrict the movable table to make the same movable in a vertical direction. A horizontal slot is provided for horizontally guiding the pins attached to the respective ends of the elongated member, the fixing part and the pins provided to the side surfaces of the movable table. A cam slot provides the operation lever pivotally mounted on the fixing part at one end thereof and having a handle at the other end thereof and driving the cam pin fixed to the movable table up and down.

Manifold assemblies can be used for change-outs of filters. However, there is a need for improved manifold assemblies.

### BRIEF SUMMARY OF THE INVENTION

An embodiment of the invention provides a manifold assembly as defined in claim 1.

Typically, a first conduit passes through the manifold inlet port and a second conduit passes through the manifold outlet port, wherein the pivotable lever is pivotable between a first position allowing the manifold assembly to receive the filter capsule, and a second position engaging the filter capsule with the manifold assembly such that the filter inlet port and the filter outlet port are respectively engaged with the first conduit passing through the manifold inlet port and the second conduit passing through the manifold outlet port.

In another embodiment, a method of moving a filter capsule along a manifold assembly as claimed in claim 3 is provided.

Preferably, a first conduit passes through the manifold inlet port and a second conduit passes through the manifold outlet port, and the method includes pivoting the pivotable lever from the first position allowing the manifold assembly to receive the filter capsule, to the second position engaging the filter capsule with the manifold assembly such that the filter inlet port and the filter outlet port are respectively engaged with the first conduit passing through the manifold inlet port and the second conduit passing through the manifold outlet port.

In a typical embodiment, the method further comprises moving the carriage assembly from the second position to the first position to move the filter inlet and outlet ports a distance away from the manifold inlet and outlet ports, the method further including removing the filter capsule from the manifold assembly.

In yet another embodiment, a method of filtering fluid is provided, the method comprising seating a filter capsule comprising a filter capsule housing including at least a filter inlet port and a filter outlet port on a moveable carriage assembly of the manifold assembly, wherein first and second conduits pass through the manifold inlet and outlet ports respectively; moving the carriage assembly and the seated filter capsule from a first position wherein the filter inlet and outlet ports are spaced from the manifold inlet and outlet ports, to a second position wherein the filter inlet and outlet ports are moved toward the manifold inlet and outlet ports and the first and second conduits are sealingly engaged with the respective filter inlet and outlet ports; passing fluid through the first conduit in the manifold inlet port and the filter inlet port through a filter comprising a porous filter in the filter capsule, and passing filtered fluid through the outlet port of the filter capsule and the second conduit in the manifold outlet port.

### BRIEF DESCRIPTION OF THE SEVERAL VIEWS OF THE DRAWING(S)

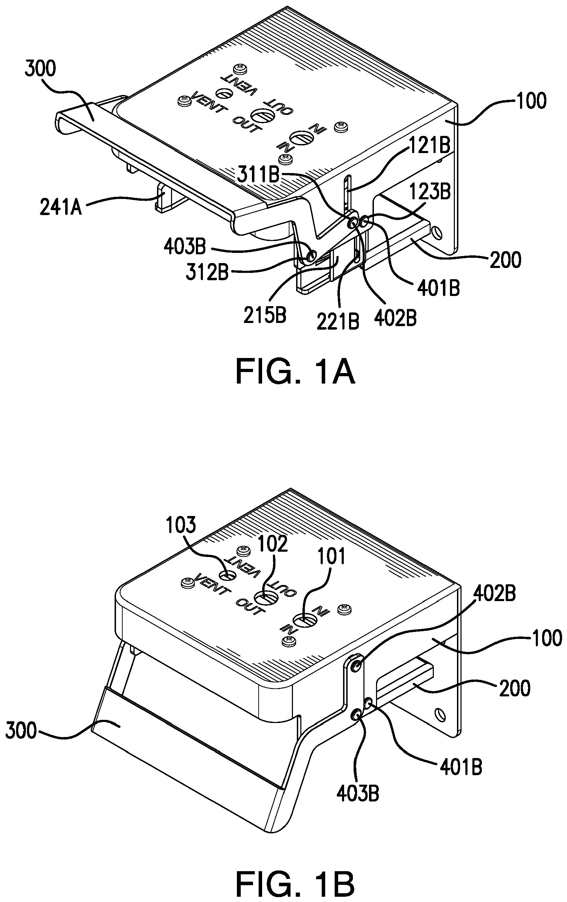

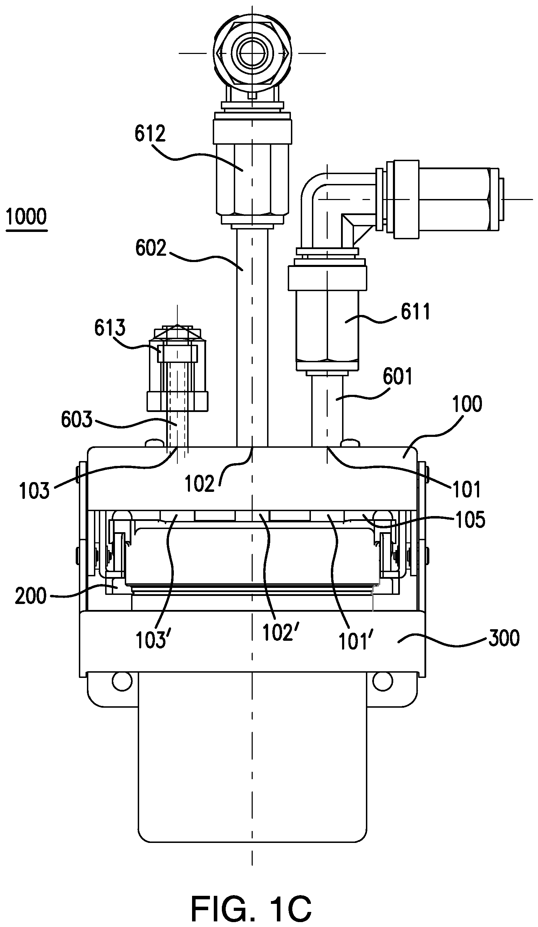

Figures 1A-1C are perspective views of a manifold assembly comprising a manifold, a carriage assembly, and a lever according to an embodiment of the invention. Figure 1A shows the manifold assembly in a first (unlocked) position, Figure 1B shows the manifold assembly in a second (locked) position, and Figure 1C shows the manifold assembly in the locked position, also showing includes fittings connected to first, second, and third conduits passing through the manifold assembly inlet, outlet, and vent ports.

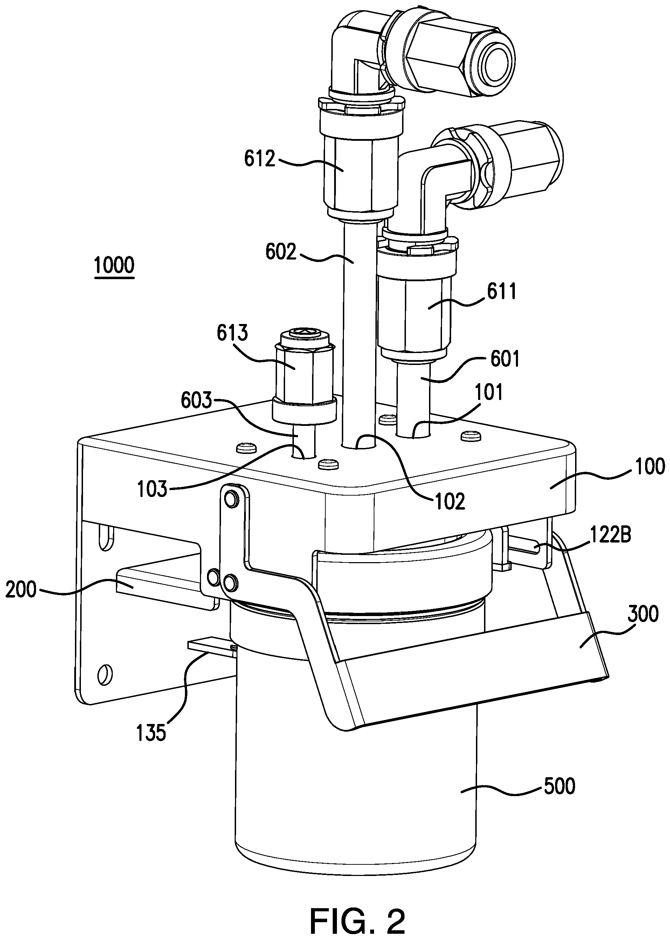

Figure 2 shows the manifold assembly with fittings in the manifold assembly, and a filter capsule, wherein the manifold assembly is in the locked position having received the filter capsule.

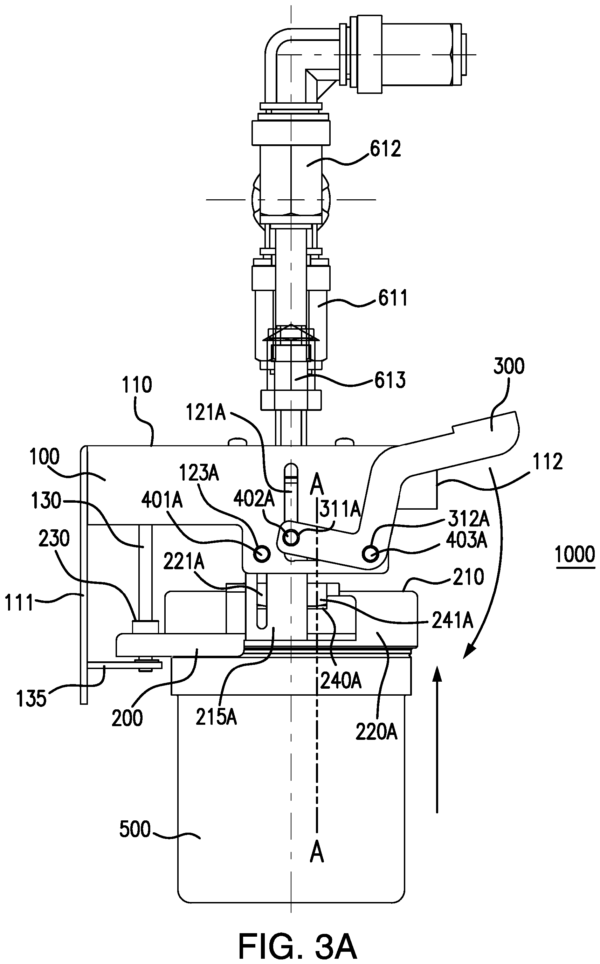

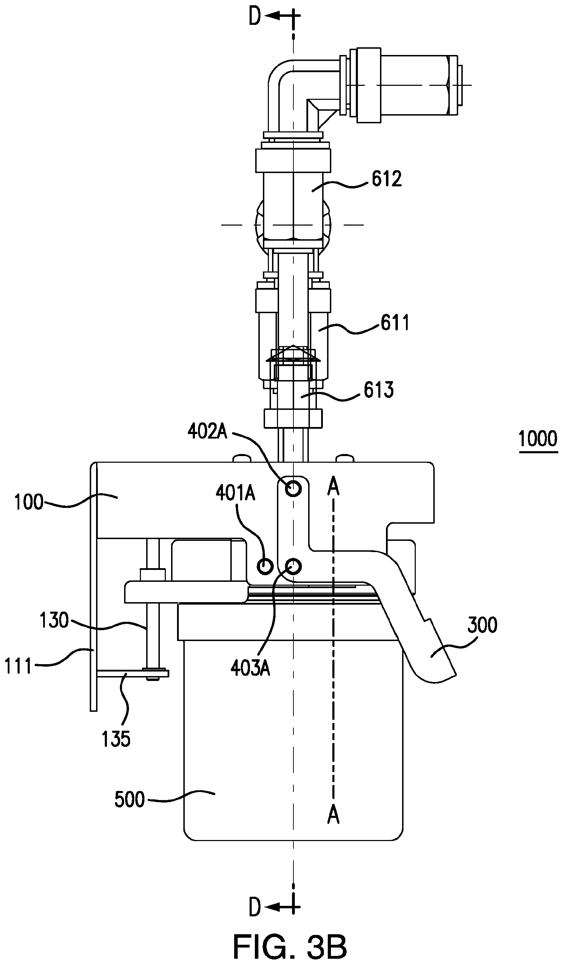

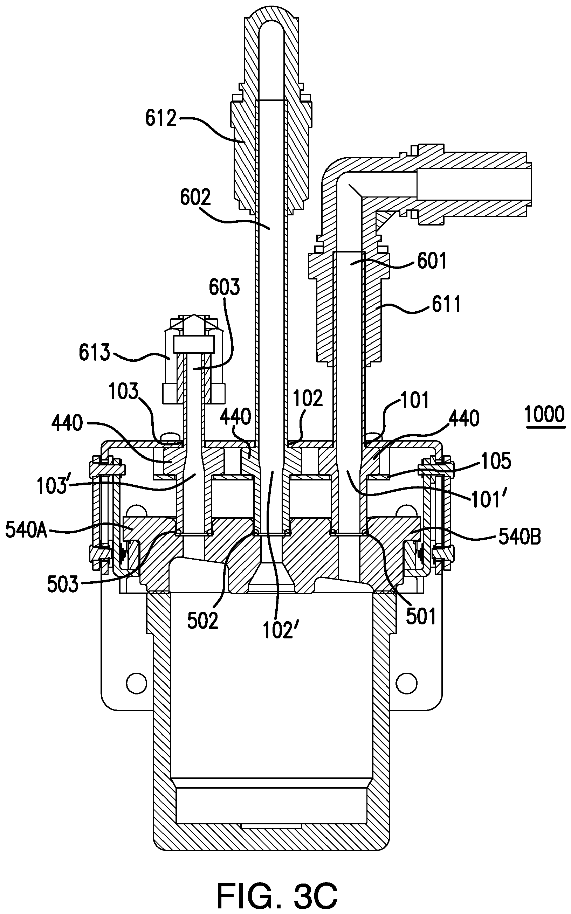

Figures 3A-3C show side views of the manifold assembly with fittings in the manifold assembly, with the filter capsule. Figure 3A shows the manifold assembly in the unlocked position, Figure 3B shows the manifold assembly in the locked position, wherein carriage assembly including the filter capsule is moved vertically upwards, and the filter capsule inlet, outlet, and vent ports seal against conduits (connected to fittings) passing through the manifold assembly vent, inlet, and outlet ports; and Figure 3C shows a sectional view along line D-D in Figure 3B.

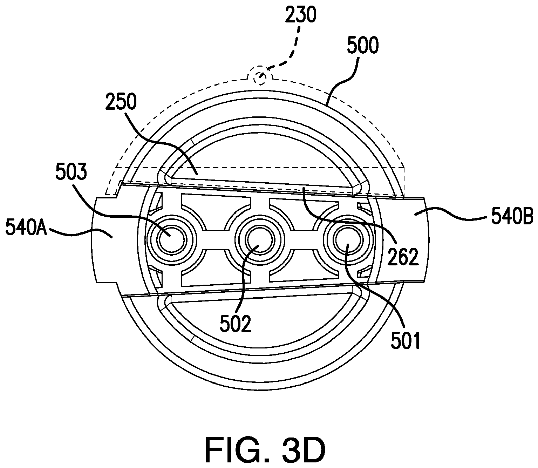

Figure 3D shows a top cut-away view of part of the manifold assembly with the filter capsule, showing the top of the filter capsule received in the carriage assembly, wherein the manifold assembly has an angled strut (shown in broken lines), and the filter capsule includes a filter inlet port, a filter outlet port, and a filter vent port, and the top of the filter capsule housing includes an angled extension, and two tabs, also showing the fool-proof design of the manifold assembly, as the filter capsule cannot be installed if the capsule is rotated 180°.

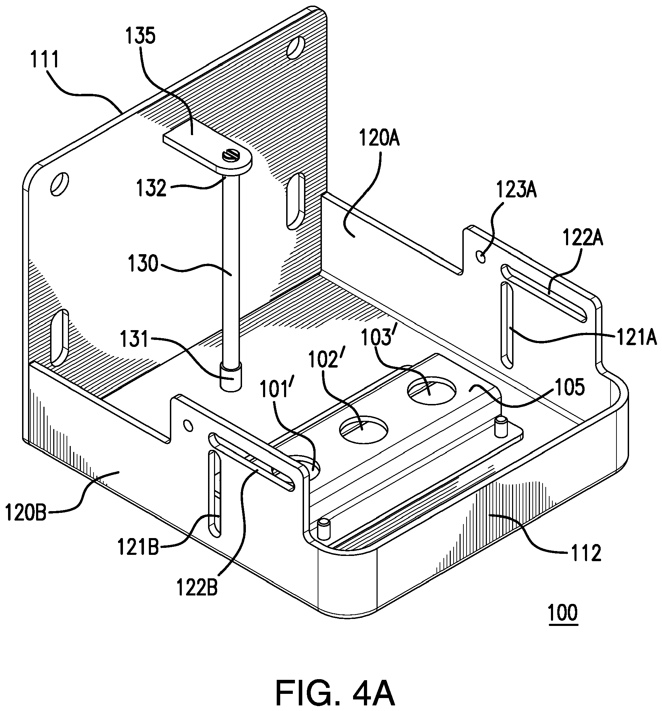

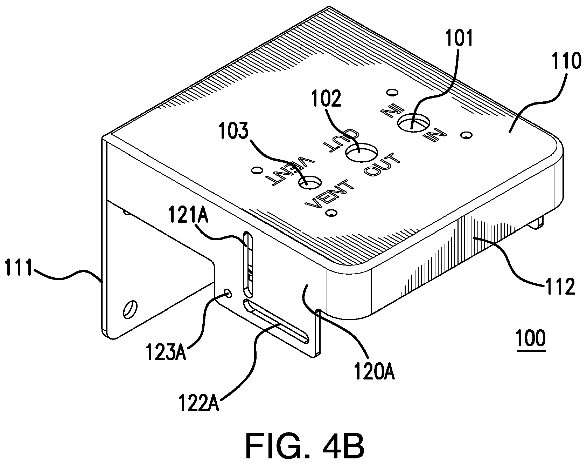

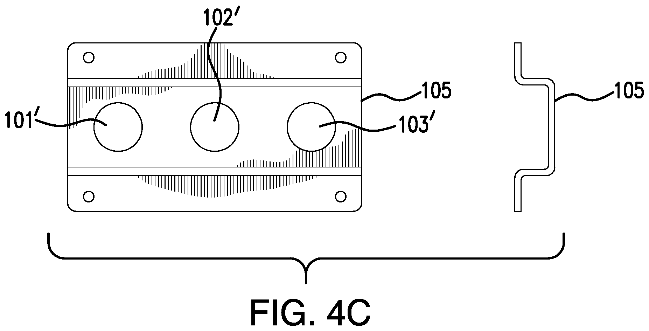

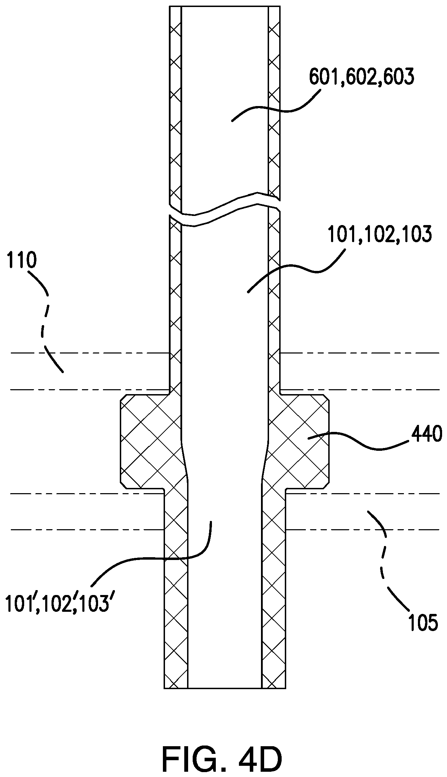

Figures 4A-4D show various views of an illustrative manifold in the manifold assembly according to an embodiment of the invention. Figure 4A shows a bottom perspective view with the inner support plate; Figure 4B shows a top perspective view; Figure 4C shows bottom and side views of the inner support plate; and Figure 4D shows conduits held between the manifold and the inner support plate.

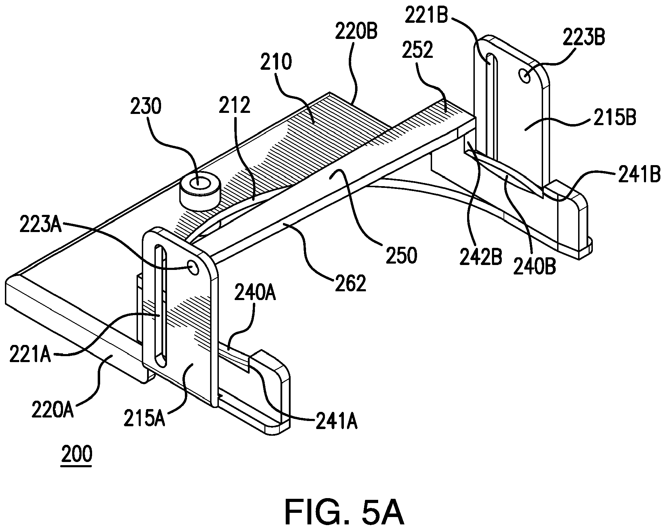

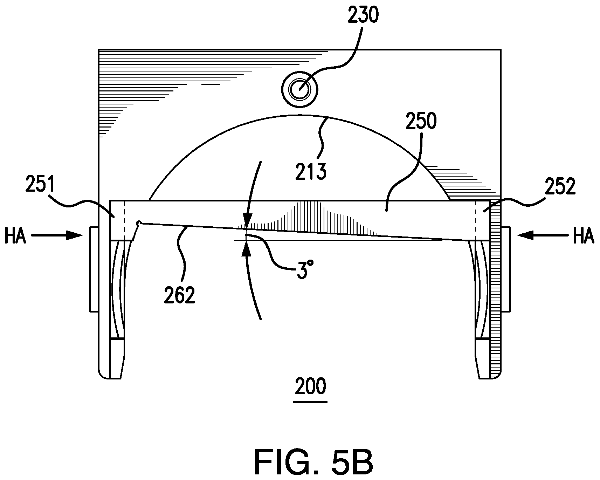

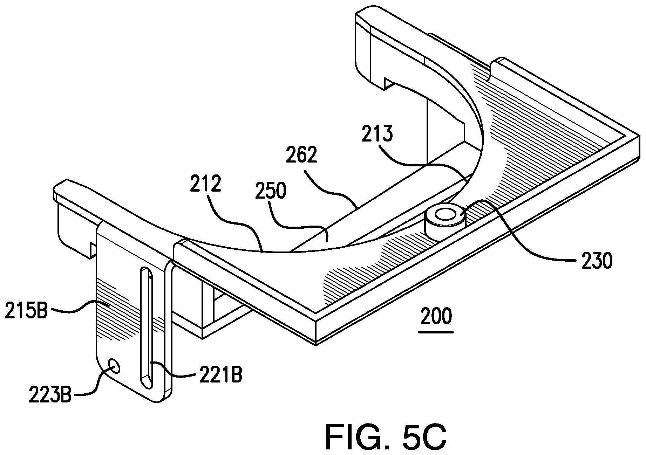

Figures 5A-5C show various views of an illustrative carriage assembly in the manifold assembly according to an embodiment of the invention. Figure 5A shows a perspective top view, Figure 5B shows a top view, also showing the angled front wall of the strut; and Figure 5C shows a perspective bottom view.

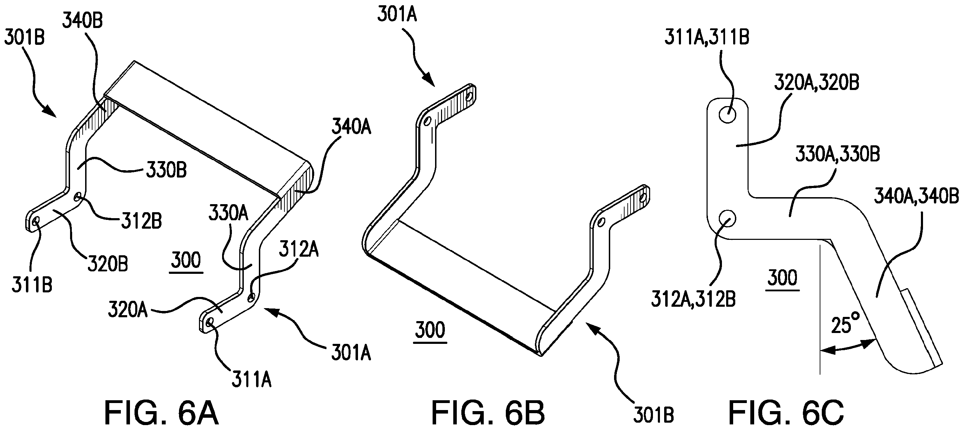

Figures 6A-6C show various views of an illustrative lever in the manifold assembly according to an embodiment of the invention. Figure 6A shows a perspective top view, Figure 6B shows a perspective bottom view, and Figure 6C shows a side view.

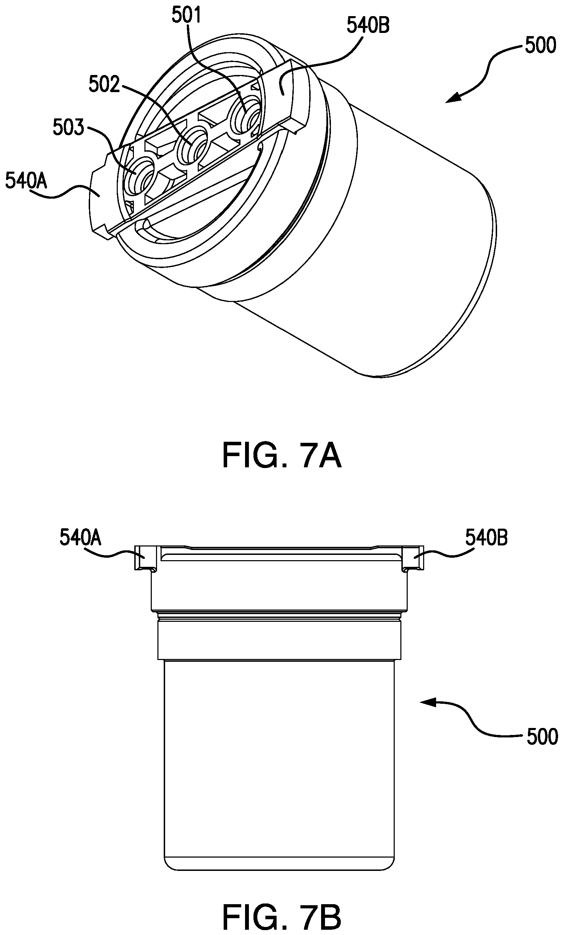

Figures 7A-7B show various views of an illustrative filter capsule. Figure 7A shows a perspective top view, and Figure 7B shows a side view.

### DETAILED DESCRIPTION OF THE INVENTION

An embodiment of the invention provides a manifold assembly for use with a filter capsule comprising a filter capsule housing including at least a filter inlet port and a filter outlet port, the manifold assembly comprising: a manifold; a carriage assembly for receiving a filter capsule, the filter capsule having at least a filter inlet port and a filter outlet port; a pivotable lever; and, a pair of first shafts; a pair of second shafts; and a pair of third shafts; (a) the manifold having at least a manifold inlet port and a manifold outlet port; a top wall; opposing first and second side walls, the first and second side walls each including, passing through the respective first and second side walls: a vertical slot, a horizontal slot, and a first manifold through hole for one of the pair of first shafts for engaging the manifold with the carriage assembly; a rear wall; a guide rod arranged parallel to, and spaced away from, the rear wall; (b) the carriage assembly having a top wall, the top wall including a guide rod opening passing through the top wall; a front wall with a cut out for receiving a filter capsule housing; opposing first and second side walls, the first and second side walls each including a vertically arranged member having a vertical slot passing through the vertical member for one of the pair of first shafts for engaging the manifold with a carriage assembly, a vertical member through hole for receiving a second rod for engaging the manifold with the carriage assembly and the pivotable lever, and a shelf with a first shoulder and second shoulder, the shelf being configured to receive, between the first and second shoulders, a protrusion on the filter capsule housing; (c) the pivotable lever being pivotable between a first position allowing the manifold assembly to receive the filter capsule, and a second position engaging the filter capsule with the manifold assembly such that the filter inlet port and the filter outlet port are moved toward the manifold inlet port and the manifold outlet port; the pivotable lever including a pair of lever arms, each of the pair of lever arms including a first lever through hole for one of the pair of second shafts for engaging the carriage assembly with the manifold and the pivotable lever, and a second lever through hole for one of the pair of third shafts for engaging the manifold with the pivotable lever, the second lever through hole being spaced away from the first lever through hole; (d) each of the pair of first shafts passing through the respective first manifold through holes and the vertical slots passing through the vertical members of the carriage assembly; (e) each of the pair of second shafts passing through the respective vertical slots of the manifold, the vertical member through holes of the carriage assembly and the first lever through holes; and (f) each of the pair of third shafts passing through respective second lever through holes and the horizontal slots of the manifold.

Typically, a first conduit passes through the manifold inlet port and a second conduit passes through the manifold outlet port, wherein the pivotable lever is pivotable between a first position allowing the manifold assembly to receive the filter capsule, and a second position engaging the filter capsule with the manifold assembly such that the filter inlet port and the filter outlet port are respectively engaged with the first conduit passing through the manifold inlet port and the second conduit passing through the manifold outlet port.

In another embodiment, a method of moving a filter capsule along a manifold assembly is provided, the method comprising seating a filter capsule comprising a filter capsule housing including at least a filter inlet port and a filter outlet port on a moveable carriage assembly of a manifold assembly, the manifold assembly comprising: a manifold; the carriage assembly; a pivotable lever; and, a pair of first shafts; a pair of second shafts; and a pair of third shafts; (a) the manifold having at least a manifold inlet port and a manifold outlet port; a top wall; opposing first and second side walls, the first and second side walls each including, passing through the respective first and second side walls: a vertical slot, a horizontal slot, and a first manifold through hole for one of the pair of first shafts for engaging the manifold with the carriage assembly; a rear wall; a guide rod arranged parallel to, and spaced away from, the rear wall; (b) the carriage assembly having a top wall, the top wall including a guide rod opening passing through the top wall; a front wall with a cut out for receiving a filter capsule housing; opposing first and second side walls, the first and second side walls each including a vertically arranged member having a vertical slot passing through the vertical member for one of the pair of first shafts for engaging the manifold with a carriage assembly, a vertical member through hole for receiving a second rod for engaging the manifold with the carriage assembly and the pivotable lever, and a shelf with a first shoulder and second shoulder, the shelf being configured to receive, between the first and second shoulders, a protrusion on the filter capsule housing; (c) the pivotable lever being pivotable between a first position allowing the manifold assembly to receive the filter capsule, and a second position engaging the filter capsule with the manifold assembly such that the filter inlet port and the filter outlet port are moved toward the manifold inlet port and the manifold outlet port; the pivotable lever including a pair of lever arms, each of the pair of lever arms including a first lever through hole for one of the pair of second shafts for engaging the carriage assembly with the manifold and the pivotable lever, and a second lever through hole for one of the pair of third shafts for engaging the manifold with the pivotable lever, the second lever through hole being spaced away from the first lever through hole; (d) each of the pair of first shafts passing through the respective first manifold through holes and the vertical slots passing through the vertical members of the carriage assembly; (e) each of the pair of second shafts passing through the respective vertical slots of the manifold, the vertical member through holes of the carriage assembly and the first lever through holes; and (f) each of the pair of third shafts passing through respective second lever through holes and the horizontal slots of the manifold; and, moving the carriage assembly and the seated filter capsule from a first position wherein the filter inlet and outlet ports are spaced from the manifold inlet and outlet ports, to a second position wherein the filter inlet and outlet ports are moved toward with the manifold inlet and outlet ports.

Preferably, a first conduit passes through the manifold inlet port and a second conduit passes through the manifold outlet port, and the method includes pivoting the pivotable lever from the first position allowing the manifold assembly to receive the filter capsule, to the second position engaging the filter capsule with the manifold assembly such that the filter inlet port and the filter outlet port are respectively engaged with the first conduit passing through the manifold inlet port and the second conduit passing through the manifold outlet port.

In a typical embodiment, the method further comprises moving the carriage assembly from the second position to the first position to move the filter inlet and outlet ports a distance away from the manifold inlet and outlet ports, the method further including removing the filter capsule from the manifold assembly.

In another embodiment, a method of filtering fluid is provided, the method comprising seating a filter capsule comprising a filter capsule housing including at least a filter inlet port and a filter outlet port on a moveable carriage assembly of the manifold assembly, wherein first and second conduits pass through the manifold inlet and outlet ports respectively, moving the carriage assembly and the seated filter capsule from a first position wherein the filter inlet and outlet ports are spaced from the manifold inlet and outlet ports, and the first and second conduits are not sealingly engaged with the respective filter inlet and outlet ports, to a second position wherein the filter inlet and outlet ports are moved toward the manifold inlet and outlet ports and the first and second conduits are sealingly engaged with the respective filter inlet and outlet ports; passing fluid through the first conduit in the manifold inlet port and the filter inlet port through a filter comprising a porous filter in the filter capsule, and passing filtered fluid through the outlet port of the filter capsule and the second conduit in the manifold outlet port.

Advantageously, filter capsules can be inserted (installed) and removed easily after use, while preventing the filter capsule from being inserted incorrectly (see, Figure 3D).

Embodiments of the invention can be used with a variety of filters and filter capsules, including, for example, those available from Pall Corporation (East Hills, NY). The filter and filter capsules are suitable for filtering a variety of fluids, including, but not limited to, a broad range of slurries and liquids, such as photochemical dispense slurries and liquids, e.g., as used in lithography.

Each of the components of the invention will now be described in more detail below, wherein like components have like reference numbers.

In accordance with the embodiment of the invention as illustrated in Figures 1A-1C, 2, 3A-3C, a manifold assembly 1000 comprises a manifold 100, a carriage assembly 200, and a lever 300. As will be discussed in more detail below, the manifold includes at least two ports, and in use, the manifold assembly further includes hollow inserts such as conduits passing through the manifold ports for fluid communication with the filter capsule ports, wherein the hollow inserts further comprise attached fittings (e.g., for communicating with a source of fluid to be filtered, for directing the filtered fluid to a desired location, and for venting).

Figures 1A, 2, and 3A show the manifold assembly 1000 in a first (unlocked) position for receiving a filter capsule, and Figures 1B, 1C, 3B, and 3C show the manifold assembly in a second (locked) position for receiving the filter capsule. Figures 2, 3A, and 3B, show, sequentially, insertion of a filter capsule 500 into the carriage assembly wherein the lever is in an upwards position, and pushing the lever downwardly and moving the carriage assembly with the seated filter capsule upwardly (along vertical axis "A-A") to lock the manifold and seated filter capsule in the second position. As will be discussed in more detail below, Figure 3D shows that the carriage assembly is configured to prevent the filter capsule from being inserted incorrectly (see also, Figures 7A and 7B).

Figures 4A-4D show various views of an illustrative manifold 100, Figures 5A-5D show various views of an illustrative carriage assembly 200, and Figures 6A and 6C show various views of an illustrative lever 300, in a manifold assembly 1000 according to an embodiment of the invention.

Using Figures 4A-4B for reference, the illustrated manifold 100 comprises at least a manifold inlet port 101 and a manifold outlet port 102, and preferably includes a vent port 103; a top wall 110; opposing first and second side walls 120A, 120B, the first and second side walls each including, passing through the respective first and second side walls: a vertical slot 121A, 121B; a horizontal slot 122A, 122B; and a first manifold through hole 123A, 123B for one of the pair of first shafts for engaging the manifold with the carriage assembly; a rear wall 111; a front wall 112; a guide rod 130 having an upper end 131 and a lower end 132, the guide rod being arranged parallel to, and spaced away from, the rear wall; a ledge 135 connected to the rear wall, the ledge being arranged perpendicular to the rear wall, and parallel to and below the top wall; wherein the upper end of the guide rod is connected to the top wall, and the lower end of the guide rod is connected to the ledge.

Figures 1C, 3C, 4C, and 4D show an inner support plate 105, e.g., a bent plate (illustrated as a squared off generally u-shaped plate) mounted to the lower surface of the top wall 110, including circular apertures 101', 102', and 103'axially aligning with the ports 101, 102, and 103, and Figures 3C and 4D shows the conduits passing through the apertures and ports. Typically, as shown in Figures 3C and 4D, the outer walls of the conduits have extensions 440 such as tabs so that the conduits can be held in position between the top wall and the inner support plate. The extensions can be integral with the conduits, or attached. In those embodiments wherein the conduits include extensions, the conduits are inserted in the ports 101, 102, 103, before the inner support plate is attached.

Using Figures 5A-5C for reference, the illustrated carriage assembly 200 comprises a top wall 210, the top wall including a guide rod opening 230 passing through the top wall (the guide rod opening allowing the carriage assembly 200 to move up and down along the guide rod 130); a front wall 212 with a curved cut out 213 for receiving a filter capsule housing; opposing first and second side walls 220A, 220B, the first and second side walls each including a vertically arranged member 215A, 215B having a vertical slot 221A, 221B, passing through the vertical member for one of the pair of first shafts for engaging the manifold with a carriage assembly, a vertical member through hole 223A, 223B, for receiving a second rod for engaging the manifold with the carriage assembly and the pivotable lever, and a shelf 240A, 240B, including a first shoulder 241A, 241B, and second shoulder 242A, 242B, the shelf being configured to receive, between the first and second shoulders, a tab 540A, 540B (see Figures 2 and 3D) on the filter capsule housing. Preferably, as shown in Figures 5B and 3D, a strut 250 having a first end 251 is attached to a portion of shelf 240A and a second end 252 is attached to a portion of shelf 240B (e.g., Figure 5A shows the first end 251 and the second end 252 are attached to the upper parts of the second shoulders 242A, 242B), the strut having a front wall 262 arranged at an angle (e.g., with respect to the horizontal axis HA-HA as shown in Figure 5B) that is the opposite of the angle of the extension on the top of the filter capsule housing, to prevent the filter capsule from being inserted incorrectly (see Figure 3D).

Using Figures 6A-6C for reference, the illustrated lever 300, that is pivotable from a first position allowing the manifold assembly 1000 to receive or remove the filter capsule 500 (see also, Figure 2), to a second position engaging the seated filter capsule with the manifold assembly such that upon moving the filter capsule the filter ports are moved toward the respective manifold ports (and the inserts such as conduits passing through the manifold ports are respectively engaged with the filter capsule ports to allow fluid communication), has a pair of arms 301A, 301B, each arm including a respective a first lever through hole 311A, 311B, for one of the pair of second shafts for engaging the carriage assembly 200 with the manifold 100 and the pivotable lever 300, and a second lever through hole 312A, 312B for one of the pair of third shafts for engaging the manifold 100 with the pivotable lever 300, the second lever through hole 312A, 312B, being spaced away from the first lever through hole 311A, 311B.

In the illustrated configuration, each lever arm has a lower portion 320A, 320B, a middle portion, 330A, 330B, and an upper portion 340A, 340B, with a common arm 350 connecting the upper portions 340A, 340B. When the arm 350 is moved fully upwards, the lower portion is typically horizontally arranged (e.g., perpendicular to vertical axis "A-A", the middle portion is generally vertically arranged, and the upper portion is angled; while a variety of angles are suitable, Figure 6C shows an angle of 25°). The lower portions 320A, 320B, include lower ends 321A, 321B of the arms 301A, 301B, and the upper portions 340A, 340B include upper ends 322A, 321B of the arms 301A, 301B, wherein, in the illustrated configuration, the first lever through holes 311A, 311B are located near the ends 321A, 321B, and the second lever through holes 312A, 312B are located at or near the positions where the lower portions, 320A, 320B, join the middle portions 330A, 330B.

Embodiments of the invention preferably include a plurality of shafts passing through various components of the manifold assembly to allow efficient sliding and/or pivoting as needed. Typically, the shafts comprise cylindrical pins having retainers (for example, circlips) mounted at each end of the shafts to keep the pins retained in the manifold assembly, and may include, for example, washers to maintain spacing. However, other arrangements are possible, e.g., the shaft can be provided as a rivet, or the shaft can have a bolt head at one end and a threaded portion with a nut at the other end, and a smooth portion between the bolt head and the threaded portion, allowing sliding and/or pivoting as appropriate.

Embodiments of the invention typically have a pair of first shafts 401A, 401B, each of the pair of first shafts passing through the respective first manifold through holes 123A, 123B and the vertical slots passing through the vertical members of the carriage assembly; a pair of second shafts 402A, 402B, each of the pair of second shafts passing through the respective vertical slots 121A, 121B of the manifold, the vertical member through holes 223A, 223B of the carriage assembly and the first lever through holes 311A, 311B; and a pair of third shafts 403A, 403B, each of the pair of third shafts passing through respective second lever through holes 312A, 312B and the horizontal slots 122A, 122B of the manifold.

In use (see Figures 1C, 2, 3A-3C), embodiments of the manifold assembly typically further comprise hollow inserts such as first, second, and third conduits 601, 602, 603 passing through the manifold ports 101, 102, and 103, for fluid communication with ports 501, 502, 503 on the filter capsule 500 (see Figures 3D, 7A, and 7B), wherein the hollow inserts are attached to fittings 611, 612, 613 (e.g., for communicating with a source of fluid to be filtered, for directing the filtered fluid to a desired location, and for venting). In moving to the second position of the manifold assembly, wherein the filter ports are moved toward the manifold ports and the conduits, the ends of the conduits facing the ports on the filter capsules are sealingly inserted into the ports, and preferably, resilient members such as o-rings are present in the openings of the ports (see Figure 3C) and fit over the outer surfaces of the conduits to improve the seal between the filter capsule ports and the ends of the conduits.

A variety of materials are suitable for producing embodiments of the manifold assembly. In some embodiments, the conduits and fittings, for example, are plastic or polytetrafluoroethylene (PTFE) or perfluoroalkoxy alkane (PFA), and the other components are metal (e.g., stainless steel) and/or composite materials.

In an embodiment, a method of moving a filter capsule along a manifold assembly comprises seating a filter capsule comprising a filter capsule housing including at least a filter inlet port and a filter outlet port on a moveable carriage assembly of a manifold assembly, the manifold assembly comprising: a manifold; the carriage assembly; a pivotable lever; and, a pair of first shafts; a pair of second shafts; and a pair of third shafts; (a) the manifold having at least a manifold inlet port and a manifold outlet port; a top wall; opposing first and second side walls, the first and second side walls each including, passing through the respective first and second side walls: a vertical slot, a horizontal slot, and a first manifold through hole for one of the pair of first shafts for engaging the manifold with the carriage assembly; a rear wall; a guide rod arranged parallel to, and spaced away from, the rear wall; (b) the carriage assembly having a top wall, the top wall including a guide rod opening passing through the top wall; a front wall with a cut out for receiving a filter capsule housing; opposing first and second side walls, the first and second side walls each including a vertically arranged member having a vertical slot passing through the vertical member for one of the pair of first shafts for engaging the manifold with a carriage assembly, a vertical member through hole for receiving a second rod for engaging the manifold with the carriage assembly and the pivotable lever, and a shelf with a first shoulder and second shoulder, the shelf being configured to receive, between the first and second shoulders, a protrusion on the filter capsule housing; (c) the pivotable lever being pivotable between a first position allowing the manifold assembly to receive the filter capsule, and a second position engaging the filter capsule with the manifold assembly such that the filter inlet port and the filter outlet port are moved toward the manifold inlet port and the manifold outlet port; the pivotable lever including a pair of lever arms, each of the pair of lever arms including a first lever through hole for one of the pair of second shafts for engaging the carriage assembly with the manifold and the pivotable lever, and a second lever through hole for one of the pair of third shafts for engaging the manifold with the pivotable lever, the second lever through hole being spaced away from the first lever through hole; (d) each of the pair of first shafts passing through the respective first manifold through holes and the vertical slots passing through the vertical members of the carriage assembly; (e) each of the pair of second shafts passing through the respective vertical slots of the manifold, the vertical member through holes of the carriage assembly and the first lever through holes; and (f) each of the pair of third shafts passing through respective second lever through holes and the horizontal slots of the manifold; and,
moving the carriage assembly and the seated filter capsule from a first position wherein the filter inlet and outlet ports are spaced away from the manifold inlet and outlet ports, to a second position wherein the filter inlet and outlet ports are moved toward the manifold inlet and outlet ports.

Preferably, a first conduit passes through the manifold inlet port and a second conduit passes through the manifold outlet port, and the method includes pivoting the pivotable lever from the first position allowing the manifold assembly to receive the filter capsule, to the second position engaging the filter capsule with the manifold assembly such that the filter inlet port and the filter outlet port are respectively engaged with the first conduit passing through the manifold inlet port and the second conduit passing through the manifold outlet port.

In a typical embodiment, the method further comprises moving the carriage assembly from the second position to the first position to move the filter inlet and outlet ports a distance away from the manifold inlet and outlet ports, the method further including removing the filter capsule from the manifold assembly.

In another embodiment, a method of filtering fluid is provided, the method comprising seating a filter capsule comprising a filter capsule housing including at least a filter inlet port and a filter outlet port on a moveable carriage assembly of the manifold assembly, the manifold assembly first and second conduits passing through the manifold inlet and outlet ports respectively, moving the carriage assembly and the seated filter capsule from a first position wherein the filter inlet and outlet ports are spaced from the manifold inlet and outlet ports, to a second position wherein the filter inlet and outlet ports are moved toward the manifold inlet and outlet ports and the first and second conduits are sealingly engaged with the respective filter inlet and outlet ports; passing fluid through the first conduit in the manifold inlet port and the filter inlet port through a filter comprising a porous filter in the filter capsule, and passing filtered fluid through the outlet port of the filter capsule and the second conduit in the manifold outlet port.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law.

## Claims

1. A manifold assembly (1000) for use with a filter capsule (500) comprising a filter capsule housing and at least a filter inlet port and a filter outlet port, the manifold assembly (1000) comprising:
a manifold (100);
a carriage assembly (200) for receiving a filter capsule (500), the filter capsule (500) having at least a filter inlet port and a filter outlet port;
a pivotable lever (300); and,
a pair of first shafts (401A, 401B); a pair of second shafts (402A, 402B); and a pair of third shafts (403A, 403B);
(a) the manifold (100) having at least a manifold inlet port (101) and a manifold outlet port (102); a top wall (110); opposing first and second side walls (120A, 120B), the first and second side walls (120A, 120B) each including, passing through the respective first and second side walls (120A, 120B): a vertical slot (121A, 121B), a horizontal slot (122A, 122B), and a first manifold through hole (123A, 123B) for one of the pair of first shafts (401A, 401B) for engaging the manifold (100) with the carriage assembly (200); a rear wall (111); a guide rod (130) arranged parallel to, and spaced away from, the rear wall (111);
(b) the carriage assembly (200) having a top wall (210), the top wall (210) including a guide rod opening (230) passing through the top wall (210); a front wall (212) with a cut out (213) for receiving a filter capsule housing; opposing first and second side walls (220A, 220B), the first and second side walls (220A, 220B) each including a vertically arranged member (215A, 215B) having a vertical slot (221A, 221B) passing through the vertical member (215A, 215B) for one of the pair of first shafts (401A, 401B) for engaging the manifold (100) with the carriage assembly (200), a vertical member through hole (223A, 223B) for receiving one of the second shafts (402A, 402B) for engaging the manifold (100) with the
carriage assembly (200) and the pivotable lever (300), and a shelf (240A, 240B) with a first shoulder (241A, 241B) and second shoulder (242A, 242B), the shelf (240A, 240B) being configured to receive, between the first and second shoulders (241A, 241B; 242A, 242B), a protrusion (540A, 540B) on the filter capsule housing;
(c) the pivotable lever (300) being pivotable between a first position allowing the manifold assembly (1000) to receive the filter capsule (500), and a second position engaging the filter capsule (500) with the manifold assembly (1000) such that the filter inlet port and the filter outlet port are moved toward the manifold inlet port (101) and the manifold outlet port (102); the pivotable lever (300) including a pair of lever arms (301A, 301B), each of the pair of lever arms (301A, 301B) including a first lever through hole (311A, 311B) for one of the pair of second shafts (402A, 402B) for engaging the carriage assembly (200) with the manifold (100) and the pivotable lever (300), and a second lever through hole (312A, 312B) for one of the pair of third shafts (403A, 403B) for engaging the manifold (100) with the pivotable lever (300), the second lever through hole (312A, 312B) being spaced away from the first lever through hole (311A, 311B);
(d) each of the pair of first shafts (401A, 401B) passing through the respective first manifold through holes (123A, 123B) and the vertical slots (121A, 121B) passing through the vertical members (215A, 215B) of the carriage assembly (200);
(e) each of the pair of second shafts (402A, 402B) passing through the respective vertical slots (121A, 121B) of the manifold (100), the vertical member through holes (223A, 223B) of the carriage assembly (200) and the first lever through holes (311A); and
(f) each of the pair of third shafts (403A, 403B) passing through respective second lever through holes (312A, 312B) and the horizontal slots (122A, 122B) of the manifold (100).

2. The manifold assembly (1000) of claim 1, wherein the carriage assembly (300) includes a strut (250) with a front wall (262) arranged at an angle for aligning with an angled extension on the filter capsule housing.

3. A method of moving a filter capsule (500) along a manifold assembly (1000) according to claim 1 or 2, the method comprising:
seating the filter capsule (500) comprising a filter capsule housing and at least a filter inlet port and a filter outlet port on a moveable carriage assembly (200) of the manifold assembly (1000); and,
moving the carriage assembly (200) and the seated filter capsule (500) from a first position wherein the filter inlet and outlet ports are spaced away from the manifold inlet and outlet ports (101, 102), to a second position wherein the filter inlet and outlet ports are moved toward the manifold inlet and outlet ports (101, 102).

4. The method of claim 3, wherein a first conduit passes through the manifold inlet port (101), and a second conduit passes through the manifold outlet port (102), and moving the carriage assembly (200) and seated filter capsule (500) from the first position to the second position includes engaging the first conduit with the filter inlet port and engaging the second conduit with the filter outlet port.

5. The method of claim 3 or 4, further comprising moving the carriage assembly (200) from the second position to the first position to disengage the filter inlet and outlet ports from the first and second conduits.

6. A method of filtering fluid, the method comprising:
seating a filter capsule (500) comprising a filter capsule housing including at least a filter inlet port and a filter outlet port on the carriage assembly (200) of the manifold assembly (1000) of claim 1 or 2, wherein first and second conduits pass through the manifold inlet and outlet ports (101; 102), respectively;
moving the carriage assembly (200) and the seated filter capsule (500) from a first position wherein the filter inlet and outlet ports are spaced from the manifold inlet and outlet ports (101; 102), to a second position wherein the first and second conduits are sealingly engaged with the respective filter inlet and outlet ports (101; 102);
passing fluid through the first conduit in the manifold inlet port (101) and the filter inlet port through a filter comprising a porous filter in the filter capsule (500), and passing filtered fluid through the outlet port of the filter capsule (500) and the second conduit in the manifold outlet port (102).

## Patentansprüche

1. Vorrichtungsanordnung (1000) zur Verwendung mit einer Filterkapsel (500), welche ein Filterkapselgehäuse und mindestens einen Filtereinlassport und einen Filterauslassport umfasst, wobei die Vorrichtungsanordnung (1000) umfasst:
eine Vorrichtung (100);
eine Trägeranordnung (200) zur Aufnahme einer Filterkapsel (500), wobei die Filterkapsel (500) mindestens einen Filtereinlassport und einen Filterauslassport aufweist;
einen schwenkbaren Hebel (300); und
ein Paar von ersten Wellen (401A, 401B); ein Paar von zweiten Wellen (402A, 402B); und ein Paar von dritten Wellen (403A, 403B);
(a) wobei die Vorrichtung (100) aufweist: mindestens einen Vorrichtungseinlassport (101) und einen Vorrichtungsauslassport (102); eine obere Wand (110); eine erste und eine zweite Seitenwand (120A, 120B), welche einander gegenüberliegen, wobei die erste und die zweite Seitenwand (120A, 120B) jeweils - die jeweilige erste und zweite Seitenwand (120A, 120B) durchsetzend - umfassen: einen vertikalen Schlitz (121A, 121B), einen horizontalen Schlitz (122A, 122B) und ein erstes Vorrichtungsdurchgangsloch (123A, 123B) für eine Welle des Paars erster Wellen (401A, 401B), um die Vorrichtung (100) mit der Trägeranordnung (200) in Eingriff zu bringen; eine Rückwand (111); eine Führungsstange (130), welche parallel zu der Rückwand (111) und beabstandet von derselben angeordnet ist;
(b) wobei die Trägeranordnung (200) aufweist: eine obere Wand (210), wobei die obere Wand (210) eine Führungsstangenöffnung (230) umfasst, welche die obere Wand (210) durchsetzt; eine vordere Wand (212) mit einer Aussparung (213) zur Aufnahme eines Filterkapselgehäuses; eine erste und eine zweite Seitenwand (220A, 220B), welche einander gegenüberliegen, wobei die erste und die zweite Seitenwand (220A, 220B) jeweils umfassen: ein vertikal angeordnetes Element (215A, 215B) mit einem das vertikale Element (215A, 215B) durchsetzenden vertikalen Schlitz (221A, 221B) für eine Welle des Paars erster Wellen (401A, 401B), um die Vorrichtung (100) mit der Trägeranordnung (200) in Eingriff zu bringen, ein Vertikalelement-Durchgangsloch (223A, 223B) zur Aufnahme einer der zweiten Wellen (402A, 402B), um die Vorrichtung (100) mit der Trägeranordnung (200) und dem schwenkbaren Hebel (300) in Eingriff zu bringen, und eine Auflage (240A, 240B) mit einer ersten Schulter (241A, 241B) und einer zweiten Schulter (242A, 242B), wobei die Auflage (240A, 240B) dazu ausgebildet ist, um zwischen den ersten und zweiten Schultern (241A, 241B; 242A, 242B) einen Vorsprung (540A, 540B) an dem Filterkapselgehäuse aufzunehmen;
(c) wobei der schwenkbare Hebel (300) zwischen einer ersten Position, welche der Vorrichtungsanordnung (1000) ermöglicht, die Filterkapsel (500) aufzunehmen, und einer zweiten Position schwenkbar ist, in welcher die Filterkapsel (500) mit der Vorrichtungsanordnung (1000) in Eingriff kommt, derart, dass der Filtereinlassport und der Filterauslassport zu dem Vorrichtungseinlassport (101) und dem Vorrichtungsauslassport (102) hin bewegt werden; wobei der schwenkbare Hebel (300) ein Paar von Hebelarmen (301A, 301B) umfasst, wobei jeder Hebelarm des Paars von Hebelarmen (301A, 301B) ein erstes Hebeldurchgangsloch (311A, 311B) für eine Welle des Paars von zweiten Wellen (402A, 402B) aufweist, um die Trägeranordnung (200) mit der Vorrichtung (100) und dem schwenkbaren Hebel (300) in Eingriff zu bringen, und ein zweites Hebeldurchgangsloch (312A, 312B) für eine Welle des Paars von dritten Wellen (403A, 403B) aufweist, um die Vorrichtung (100) mit dem schwenkbaren Hebel (300) in Eingriff zu bringen, wobei das zweite Hebeldurchgangsloch (312A, 312B) von dem ersten Hebeldurchgangsloch (311A, 311B) weg beabstandet ist;
(d) wobei jede Welle des Paars von ersten Wellen (401A, 401B) die jeweiligen ersten Vorrichtungsdurchgangslöcher (123A, 123B) und die vertikalen Schlitze (121A, 121B) durchsetzt, welche die vertikalen Elemente (215A, 215B) der Trägeranordnung (200) durchsetzen;
(e) wobei jede Welle des Paars von zweiten Wellen (402A, 402B) die jeweiligen vertikalen Schlitze (121A, 121B) der Vorrichtung (100), die Vertikalelement-Durchgangslöcher (223A, 223B) der Trägeranordnung (200) und die ersten Hebeldurchgangslöcher (311A) durchsetzt; und
(f) wobei jede Welle des Paars von dritten Wellen (403A, 403B) jeweilige zweite Hebeldurchgangslöcher (312A, 312B) und die horizontalen Schlitze (122A, 122B) der Vorrichtung (100) durchsetzt.

2. Vorrichtungsanordnung (1000) nach Anspruch 1, wobei die Trägeranordnung (300) eine Strebe (250) mit einer Vorderwand (262) umfasst, welche in einem Winkel angeordnet ist, um zu einem abgewinkelten Fortsatz an dem Filterkapselgehäuse ausgerichtet zu sein.

3. Verfahren zum Bewegen einer Filterkapsel (500) entlang einer Vorrichtungsanordnung (1000) nach Anspruch 1 oder 2, wobei das Verfahren umfasst:
Anordnen der Filterkapsel (500), welche ein Filterkapselgehäuse und mindestens einen Filtereinlassport und einen Filterauslassport umfasst, an einer beweglichen Trägeranordnung (200) der Vorrichtungsanordnung (1000); und
Bewegen der Trägeranordnung (200) und der daran angeordneten Filterkapsel (500) aus einer ersten Position, in welcher die Filtereinlass- und -auslassports von den Vorrichtungseinlass- und -auslassports (101, 102) weg beabstandet sind, in eine zweite Position, in welcher die Filtereinlass- und -auslassports zu den Vorrichtungseinlass- und -auslassports (101, 102) hin bewegt werden.

4. Verfahren nach Anspruch 3, wobei eine erste Leitung durch den Vorrichtungseinlassport (101) führt und eine zweite Leitung durch den Vorrichtungsauslassport (102) führt und wobei das Bewegen der Trägeranordnung (200) mit der daran angeordneten Filterkapsel (500) von der ersten Position in die zweite Position umfasst: Ineingriffbringen der ersten Leitung mit dem Filtereinlassport und Ineingriffbringen der zweiten Leitung mit dem Filterauslassport.

5. Verfahren nach Anspruch 3 oder 4, ferner umfassend: Bewegen der Trägeranordnung (200) aus der zweiten Position in die erste Position, um die Filtereinlass- und -auslassports bezüglich der ersten und zweiten Leitungen außer Eingriff zu bringen.

6. Verfahren zum Filtern eines Fluids, wobei das Verfahren umfasst:
Anordnen einer Filterkapsel (500), welche ein Filterkapselgehäuse umfasst, welches mindestens einen Filtereinlassport und einen Filterauslassport umfasst, an der Trägeranordnung (200) der Vorrichtungsanordnung (1000) nach Anspruch 1 oder 2, wobei die ersten und zweiten Leitungen durch den Vorrichtungseinlassport bzw. den Vorrichtungsauslassport (101; 102) führen;
Bewegen der Trägeranordnung (200) und der daran angeordneten Filterkapsel (500) aus einer ersten Position, in welcher die Filtereinlass- und -auslassports von den Vorrichtungseinlass- und -auslassports (101; 102) beabstandet sind, in eine zweite Position, in welcher die ersten und zweiten Leitungen mit den jeweiligen Filtereinlass- und -auslassports (101; 102) in dicht abschließendem Eingriff sind;
Durchleiten von Fluid durch die erste Leitung in dem Vorrichtungseinlassport (101) und dem Filtereinlassport durch ein Filter, welches ein poröses Filter in der Filterkapsel (500) umfasst, und Durchleiten von gefiltertem Fluid durch den Auslassport der Filterkapsel (500) und die zweite Leitung in dem Vorrichtungsauslassport (102).

## Revendications

1. Ensemble collecteur (1000) destiné à être utilisé avec une capsule de filtre (500) comprenant un boîtier de capsule de filtre et au moins un orifice d'entrée de filtre et un orifice de sortie de filtre, l'ensemble collecteur (1000) comprenant :
un collecteur (100) ;
un ensemble chariot (200) pour recevoir une capsule de filtre (500), la capsule de filtre (500) ayant au moins un orifice d'entrée de filtre et un orifice de sortie de filtre ;
un levier pivotant (300) ; et
une paire de premiers arbres (401A, 401B) ; une paire de deuxièmes arbres (402A, 402B) ; et une paire de troisièmes arbres (403A, 403B) ;
(a) le collecteur (100) ayant au moins un orifice d'entrée de collecteur (101) et un orifice de sortie de collecteur (102) ; une paroi supérieure (110) ; des première et seconde parois latérales (120A, 120B) opposées, les première et seconde parois latérales (120A, 120B) comprenant chacune, passant par les première et seconde parois latérales (120A, 120B) respectives : une fente verticale (121A, 121B), une fente horizontale (122A, 122B), et un premier trou débouchant de collecteur (123A, 123B) pour que l'un de la paire de premiers arbres (401A, 401B) mette en prise le collecteur (100) avec l'ensemble chariot (200) ; une paroi arrière (111) ; une tige de guidage (130) agencée parallèlement à et espacée de la paroi arrière (111) ;
(b) l'ensemble chariot (200) ayant une paroi supérieure (210), la paroi supérieure (210) comprenant une ouverture de tige de guidage (230) passant par la paroi supérieure (210) ; une paroi avant (212) avec une découpe (213) pour recevoir un boîtier de capsule de filtre ; des première et seconde parois latérales (220A, 220B) opposées, les première et seconde parois latérales (220A, 220B) comprenant chacune un élément agencé verticalement (215A, 215B) ayant une fente verticale (221A, 221B) passant par l'élément vertical (215A, 215B) pour que l'un de la paire de premiers arbres (401A, 401B) mette en prise le collecteur (100) avec l'ensemble chariot (200), un trou débouchant d'élément vertical (223A, 223B) pour recevoir l'un des deuxièmes arbres (402A, 402B) pour mettre en prise le collecteur (100) avec l'ensemble chariot (200) et le levier pivotant (300), et une étagère (240A, 240B) avec un premier épaulement (241A, 241B) et un second épaulement (242A, 242B), l'étagère (240A, 240B) étant configurée pour recevoir, entre les premier et second épaulements (241A, 241B ; 242A, 242B), une saillie (540A, 540B) sur le boîtier de capsule de filtre ;
(c) le levier pivotant (300) pouvant pivoter entre une première position permettant à l'ensemble collecteur (1000) de recevoir la capsule de filtre (500) et une seconde position mettant en prise la capsule de filtre (500) avec l'ensemble collecteur (1000) de sorte que l'orifice d'entrée de filtre et l'orifice de sortie de filtre sont déplacés vers l'orifice d'entrée de collecteur (101) et l'orifice de sortie de collecteur (102) ; le levier pivotant (300) comprenant une paire de bras de levier (301A, 301B), chacun de la paire de bras de levier (301A, 301B) comprenant un premier trou débouchant de levier (311A, 311B) pour que l'un de la paire de deuxièmes arbres (402A, 402B) mette en prise l'ensemble chariot (200) avec le collecteur (100) et le levier pivotant (300), et un second trou débouchant de levier (312A, 312B) pour que l'un de la paire de troisièmes arbres (403A, 403B) mette en prise le collecteur (100) avec le levier pivotant (300), le second trou débouchant de levier (312A, 312B) étant espacé du premier trou débouchant de levier (311A, 311B) ;
(d) chacun de la paire de premiers bras (401A, 401B) traversant les premiers trous débouchants de collecteur (123A, 123B) respectifs et la fente verticale (121A, 121B) traversant les éléments verticaux (215A, 215B) de l'ensemble chariot (200) ;
(e) chacun de la paire de deuxièmes arbres (402A, 402B) traversant les fentes verticales (121A, 121B) respectives du collecteur (100), les trous débouchants d'élément vertical (223A, 223B) de l'ensemble chariot (200) et les premiers trous débouchants de levier (311A) ; et
(f) chacun de la paire de troisièmes bras (403A, 403B) traversant les seconds trous débouchants de levier (312A, 312B) respectifs et les fentes horizontales (122A, 122B) du collecteur (100).

2. Ensemble collecteur (1000) selon la revendication 1, dans lequel l'ensemble chariot (300) comprend une entretoise (250) avec une paroi avant (262) agencée à un angle pour l'alignement avec une extension coudée sur le boîtier de capsule de filtre.

3. Procédé pour déplacer une capsule de filtre (500) le long d'un ensemble collecteur (1000) selon la revendication 1 ou 2, le procédé comprenant les étapes consistant à :
installer la capsule de filtre (500) comprenant un boîtier de capsule de filtre et au moins un orifice d'entrée de filtre et un orifice de sortie de filtre sur un ensemble chariot (200) mobile de l'ensemble collecteur (1000) ; et
déplacer l'ensemble chariot (200) et la capsule de filtre (500) installée d'une première position dans laquelle les orifices d'entrée et de sortie de filtre sont espacés des orifices d'entrée et de sortie de collecteur (101, 102), à une seconde position dans laquelle les orifices d'entrée et de sortie de filtre sont déplacés vers les orifices d'entrée et de sortie de collecteur (101, 102).

4. Procédé selon la revendication 3, dans lequel un premier conduit traverse l'orifice d'entrée de collecteur (101) et un second conduit traverse l'orifice de sortie de collecteur (102), et l'étape consistant à déplacer l'ensemble chariot (200) et la capsule de filtre (500) installée de la première position à la seconde position comprend l'étape consistant à mettre en prise le premier conduit avec l'orifice d'entrée de filtre et mettre en prise le second conduit avec l'orifice de sortie de filtre.

5. Procédé selon la revendication 3 ou 4, comprenant en outre l'étape consistant à déplacer l'ensemble chariot (200) de la seconde position à la première position pour dégager les orifices d'entrée et de sortie de filtre des premier et second conduits.

6. Procédé pour filtrer du fluide, le procédé comprenant les étapes consistant à :
installer une capsule de filtre (500) comprenant un boîtier de capsule de filtre comprenant au moins un orifice d'entrée de filtre et un orifice de sortie de filtre sur l'ensemble chariot (200) de l'ensemble collecteur (1000) selon la revendication 1 ou 2, dans lequel les premier et second conduits traversent respectivement les orifices d'entrée et de sortie de collecteur (101 ; 102) ;
déplacer l'ensemble chariot (200) et la capsule de filtre (500) installée d'une première position dans laquelle les orifices d'entrée et de sortie de filtre sont espacés des orifices d'entrée et de sortie de collecteur (101 ; 102), à une seconde position dans laquelle les premier et second conduits sont mis en prise, de manière étanche, avec les orifices d'entrée et de sortie de filtre (101, 102) respectifs ;
faire passer le fluide par le premier conduit dans l'orifice d'entrée de collecteur (101) et l'orifice d'entrée de filtre par le biais d'un filtre comprenant un filtre poreux dans la capsule de filtre (500) et faire passer le fluide filtré par l'orifice de sortie de la capsule de filtre (500) et le second conduit dans l'orifice de sortie de collecteur (102).
